# EUROPEAN PATENT APPLICATION

(11) **EP 1 712 975 A1**
(43) Date of publication of application: **18.10.2006**
(21) Application number: 05075860.6
(22) Date of filing: 14.04.2005
(51) Int. Cl.: G06F 1/00

(54) **Method and system for authenticating a terminal or terminal user**

(71) Applicant: NEDERLANDSE ORGANISATIE VOOR TOEGEPAST-NATUURWETENSCHAPPELIJK ONDERZOEK TNO, 2628 VK Delft (NL)
(72) Inventor: Emde, Michel Francois, 9723 DR Groningen (NL)
(74) Representative: Winckels, Johannes Hubertus F.

(57) **Abstract**

Method and system for authenticating a terminal (1) or terminal user, fit for originating requests to one or more application services (2a, 2b, 2c) via a network (3). In a common authentication step the terminal authenticates itself and stores its network address, linked to its authentication code. In a service authentication step, the terminal originates a request to a application service, which authenticates, using the requesting terminal's network address and the network address stored in the common authentication step, its identity.

## Description

### Field

The invention concerns authentication of a terminal or terminal user, logging in to application services via a network. More specifically, the invention refers to a method or system for authenticating such a terminal or user, originating a service request to one or more application services.

### Background

It is known that when originating a service request to an application service via a network, e.g. the Internet or such a multimedia network, the requested application services often will require authentication of the requesting terminal or its user. Authentication may be defined as the determination or assessment of the identity of a user or terminal, logging onto e.g. a service like a network or a server. Additionally, passwords, digital certificates, smart cards, biometrics etc. may be used to prove the client's identity. In most cases authentication -assessment of the user's or terminal's identity ("who/what is he/she/it?")- will be followed by or incorporate authorization, which comprises the determination or assessment of the user's or terminal's right or permission to get access ("may he/she/it come in?") and/or use the relevant service ("what is he/she/it allowed to do?"). Thus, where applicable, "authentication" may be deemed to imply "authorization".

Authentication will e.g. be required at each individual application service. When a terminal user regularly wants to use several services during an Internet session, e.g. E-mailing, browsing, receiving streaming news or music, voice over IP, instant messaging etc., the user may be required to log in separately to each of the various services.

### Summary

Goal of the present invention is to meet the objection of separate authentication at several services after each new network session.

To reach this goal, the method discussed hereinafter may comprise an authentication step, common for various applications or application services, which common authentication step needs to be performed only once per network session during which the terminal's network address (e.g. its IP address) remains unchanged. In that common authentication step the terminal sets up a connection to a common authentication service and the terminal or its user are requested by the common authentication service to authenticate itself or him/herself respectively to that common authentication service, using a common authentication code, e.g. a username and (to verify the username) a password. When this (common) authentication has run, the common authentication service writes the terminal's actual network address into an authentication buffer.

Next to the common authentication step, for each application service the terminal or its user desires to make use of, a service authentication step is performed, comprising that
- the terminal originates a service request to the application service selected by the user (or maybe more or less autonomously by the terminal itself, e.g. initiated by its software) e.g. by setting up a connection to the selected application service via the network;
- the selected application service transfers (e.g. copies) the terminal's network address to the common authentication service;
- the common authentication service checks the network address received from the application service against the relevant network address in its authentication buffer.

The result of the common authorization action may be processed further in different ways. After having checked the received network address with the network address written in the authentication buffer, the common authentication service may transfer an OK/NOK code, the value of which ("OK" or "NOK") depends on the check result (network address found or not found in the authentication buffer), to the application service. In this option the application, entirely trusting the authentication action of the common authentication service, e.g. will accept the terminal's service request after receiving an OK (terminal/user's authentication positive) code. In this option the application service delegates the authentication of the terminal or user to the authentication service.

Alternatively, the common authentication service may transfer, after having checked the received network address with the network address written in the authentication buffer, if the check is positive, an application authentication code (e.g. a application or service related username with or without a password) to the application service, which authentication code is valid for that application service. The common authentication code itself could be used for all relevant applications to be used as a valid application authentication code. Optionally, the application authentication codes of different application services might be derived from the common authentication code. To that end one or more application authentication codes may be registered in the common authentication service for said terminal or its user during or prior to the common authentication step, each application authentication code being valid for one or various application services. The application authentication codes may be registered in the common authentication service, referring to (linked to or labeled with) the relevant common authentication code of the relevant terminal or its user.

For sake of registering of the application authentication codes for different services in the common authentication service a registration step may be established, prior to the common authentication step, wherein -in general- data, concerning the terminal and/or its user can be registered referring to the common authentication code. During the registration step the relevant application authentication codes may be registered in the common authentication service, each application authentication code being valid for one or more application services to be used by the terminal or its user.

Not only authentication codes may be registered in the common authentication service during the registration step, but also application authorization parameters, valid for one or more application services and e.g. comprising license data etc., relevant for usage permissions of said applications (e.g. restricted, standard or extended use) assigned to or valid for the terminal or its user.

The registration step enables a registration of either e.g. various authentication codes, valid for the terminal and/or its user to be used for logging in at various application services, and/or various authorization parameters, e.g. license, subscription and/or permission data, valid for the terminal and/or its user for getting permission to use the various application services, e.g. as a "lite" subscriber, having restricted access or options or as a "professional" subscriber, having extended usage rights..

As stated before, the network may be an IP enabled network, e.g. the Internet or another multimedia network, and the terminal network address is an IP address assigned to it.
In most cases the terminal is assigned an IP address by the network at each new network session, which IP address remains unchanged during that session. The terminal's (IP) network address, written in the authentication buffer, preferably will be deleted or inactivated otherwise when the terminal or its user disconnects from the common authentication service. The reason of this is that as soon as the terminal disconnects, in practice the (IP) address used by the terminal during its session, will become free for usage in a new (TCP/IP) connection/session between a quite different terminal and the network, which has nothing to do with the previous one.

The data registered during the registration step preferably are not "volatile", in other words, those data (application authentication codes, authorization codes etc.) preferably will not be "cleaned up" at the end of each session, which is different from the storage of the terminal's network address in the authentication buffer, which has a more temporary character.

Finally it is noted that an application service may comprise an (application) network and/or one or more application servers. Besides, an application service may comprise a server forming an interface between the relevant application servers and the common authentication service, thus achieving that the application servers don't need to be modified for cooperation with the common authentication service as proposed in the preceding specification. The server forming an interface may be formed by or cooperate with a common firewall server for the relevant application servers of the application service.

Below the method outlined here in short, will be elaborated and discussed.

### Exemplary embodiment

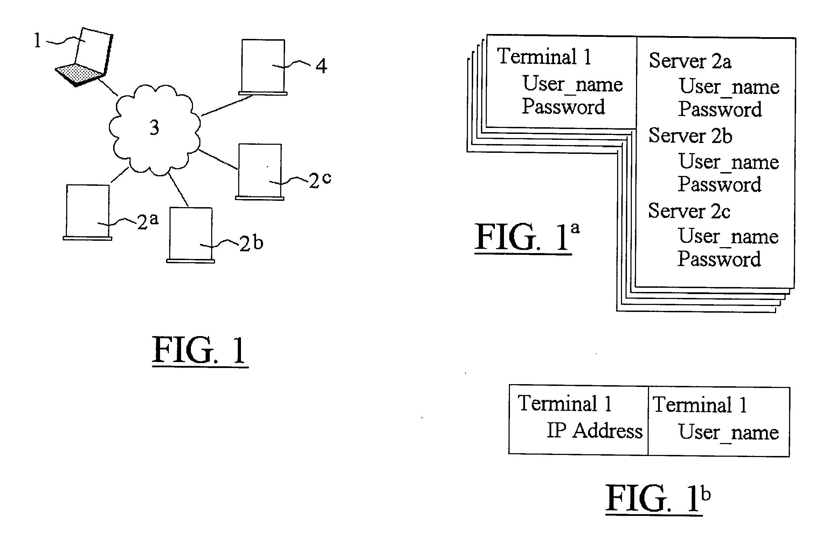

Figure 1 shows an exemplary embodiment of a system which is adapted for performing the method as outlined in the previous section.
Figure 1a and 1b are auxiliary figures, illustrating the structure of the registration, at the common authentication service, of the authentication data per terminal for the respective applications services.

Figure 1 illustrates an e.g. multimedia system, wherein a user (terminal) 1 wants to use the services provided by one or more of services 2 (2a, 2b, 2c, etc.) via the Internet 3. The user prefers not to log in (and to authenticate) at each individual service 2a, 2b, 2c separately. Instead, according to the method outlined above, the user logs in via his/her terminal 1 during only a single common authentication step, in which the terminal connects to a common authentication service 4 and the terminal or its user authenticates itself or him/herself respectively to that common authentication service using a common authentication code, e.g. a username and password combination. If the authentication is successful, the common authentication service 4 writes the terminal's actual network address (IP address) into an authentication buffer. To guarantee, that the IP-addresses in the authentication buffer indeed belongs to authenticated terminals or users, and to achieve that the terminal's network address will be deleted from the authentication buffer (or inactivated otherwise) as soon as the terminal or its user disconnects from the common authentication service the connection between the terminal 1 and the authentication service 4 will remain open during the entire terminal session with the Internet. When the terminal's Internet session ends -which can be detected by the common authentication service 4- the terminal's IP network address is deleted from the authentication buffer (or inactivated otherwise). At a new Internet session the terminal may get another IP address at connection to the common authentication service, which, in a new common authentication step, can be buffered in the authentication service 4.

After the common authentication step, performed at the common authentication service 4, the user or terminal may want to select and activate one or more applications residing at application services 2a, 2b and/or 2c. To that end the terminal 1 sends a service request to e.g. service 2a by initiating a connection to that service. The connection with the common authentication service 4 remains intact.

On reception of the service request, the selected application service 2a will -as part of a service authentication step- detect the terminal's IP address of the terminal requesting its service and transfer (the value of) it to the common authentication service 4. The common authentication service 4 checks the network address received from the application service 2a against the network address in its authentication buffer. After having checked the received network address with the network address written in the authentication buffer, the common authentication service 4 transfers an OK/NOK code, the value of which depends on the check result, to the application service: if the terminal's IP address was found indeed in the authentication buffer the code e.g. may be "OK" or "1", when not found "N(ot)OK" or "0".

Optionally, after having checked the received network address against the network address written in the authentication buffer, the common authentication service may transfer, if the check is positive, an application authentication code to the application service which is valid for that application service, e.g. the relevant username/password combination valid for the relevant user/terminal 1 at logging on at service 2a. An advantage of this may be that the application services 2 do not need any (additional) software or hardware means to recognize any OK/NOK codes etc.

The application authentication code could be equal to the common authentication code used in the common authentication step by the terminal 1 or its user. However it might be disadvantageous to use one and the same authentication code for the authentication service as well as the various application services to log in. Therefore it might be preferred that for the various applications and/or services 2a, 2b, 2c the relevant (preferably different) application authentication codes are derived from the common authentication code. For that reason it might be useful when during or prior to the common authentication step, for said terminal or its user, one or more application authentication codes would be registered in the common authentication service, each application authentication code being valid for one or more application services. For each terminal or its user, one or more application authentication codes could be registered in the common authentication service, referring to (labeled with or pointing to) the relevant common authentication code. Preferably this preferred actions will be performed in a registration step, prior to said common authentication step, wherein data, concerning the terminal and/or its user are registered, referring to said common authentication code. During said registration step, for said terminal or its user, one or more application authentication codes could be registered in the common authentication service, each application authentication code being valid for one or more application services.

Figure 1a illustrates a register for the registration of the user names and passwords which are valid for terminal 1 to authenticate at the common authentication service 4 (left side) and -optionally- valid for terminal 1 to authenticate at the application service 2a, application service 2b and application service 2c respectively. Instead of the storing and transferring the usernames and passwords for the relevant application services 2, the common application service may output an OK/NOK code, viz. when the terminal's IP address is or is not stored (temporarily) in the authentication buffer, which buffer is illustrated by Figure 1b. As long as -after having authenticated itself at the common authentication service 4- the terminal 1 maintains its connection with the common authentication service 4, the terminal's IP address remains stored in the authentication buffer, referring to the terminal's authentication code, viz. its usemame. As soon as the terminal 1 ends its connection with the authentication service 4, e.g. due to ending the terminal's Internet session, it is not known for sure that the network address still belongs to the previously authenticated user or terminal, and hence the authentication service 4 will clean up the terminal's registration in authentication buffer, having as result that the terminal 1 cannot be authenticated any longer by the authentication service 4. A new common authentication step at the common authentication service will be necessary to restore the common authentication facility for the terminal again.

As stated before, during the registration step, data concerning the terminal and/or its user may registered in the authentication service, labeled with the common authentication code valid for the terminal or user. The data may concern application authentication codes for one or more applications but, moreover, those data may also comprise e.g. one or more authorization parameters valid to check and set e.g. the permissions to be given to the service requesting terminal or user, in other words comprising license data relevant for access and/or use of said one or more applications, assigned to the terminal or its user. Although these authorization parameters may be registered in the common authentication service, sometimes it will preferred that such authorization parameters resides within the relevant application service themselves, coupled with the relevant terminal/user authentication codes like their usernames. Within the application service the relevant authorization parameters will be checked and set after a requesting terminal or user has logs on, authenticating it/him/herself either using the protocol (method) proposed here, or using a state-or-the-art protocol.

The common authentication service may reside at an independent service 4, fit to serve various application services 2a, 2b, 2c and terminals 1, or may e.g. reside within one cluster of application services 2 or may even reside within the terminal 1 and e.g. be adapted to be used only by that terminal 1 and its user for logging in at the various application services 2 for which the terminal 1 or user has valid license rights.

## Claims

1. Method for authenticating a terminal (1) or terminal user, arranged for originating a service request to one or more application services (2a, 2b, 2c) via a network (3), the requested application services requiring authentication by the requesting terminal or its user, the method comprising next steps:
- a common authentication step in which the terminal connects to a common authentication service (4) and the terminal or its user authenticates itself or him/herself respectively to that common authentication service using a common authentication code, which common authentication service writes, if the authentication is successful, the terminal's network address into an authentication buffer;
- a service authentication step, comprising the steps that
- the terminal originates a service request to a selected application service;
- the selected application service transfers the terminal's network address to the common authentication service;
- the common authentication service checks the network address received from the application service with the relevant network address in its authentication buffer.

2. Method according to claim 1, comprising that after having checked the received network address with the network address written in the authentication buffer, the common authentication service transfers an OK/NOK code, the value of which depends on the check result, to the application service.

3. Method according to claim 1, comprising that after having checked the received network address with the network address written in the authentication buffer, the common authentication service transfers, if the check is positive, an application authentication code to the application service which is valid for that application service.

4. Method according to claim 3, wherein the application authentication code is equal to the common authentication code.

5. Method according to claim 3, wherein the application authentication code is derived from the common authentication code.

6. Method according to claim 1, comprising that during or prior to the common authentication step, for said terminal or its user, one or more application authentication codes are registered in the common authentication service, each application authentication code being valid for one or more application services.

7. Method according to claim 5 and 6, wherein for the terminal or its user, one or more application authentication codes are registered in the common authentication service, referring to the relevant common authentication code.

8. Method according to either claim 1 or claim 7, comprising a registration step prior to said common authentication step, wherein data, concerning the terminal and/or its user are registered, referring to said common authentication code.

9. Method according to claim 6 and 8, wherein, during said registration step, for said terminal or its user, one or more application authentication codes are registered in the common authentication service, each application authentication code being valid for one or more application services.

10. Method according to claim 8, wherein, during said registration step, for said terminal or its user, one or more application authorization parameters are registered in the common authentication service, each application authorization parameter being valid for one or more applications, implemented at one or more services.

11. Method according to claim 10, said one or more application authorization parameters comprising license data relevant for access and/or use of said one or more applications, assigned to the terminal or its user.

12. Method according to claim 1, wherein the network is an IP enabled network and the terminal network address is an IP address assigned to it.

13. Method according to claim 1 or 12, wherein the terminal's network address written in the authentication buffer is deleted or inactivated otherwise when the terminal or its user disconnects from the common authentication service.

14. System for authenticating a terminal (1) or terminal user, arranged for originating a service request to one or more application services (2a, 2b, 2c) via a network (3), the requested application services requiring authentication by the requesting terminal or its user, the system comprising means (4) arranged for performing a common authentication step in which the terminal connects to a common authentication service and the terminal or its user authenticates itself or him/herself respectively to that common authentication service using a common authentication code, which common authentication service writes, if the authentication is successful, the terminal's actual network address into an authentication buffer.

15. System according to claim 14, comprising means arranged for performing a service authentication step, wherein
- the terminal originates a service request to a selected application service;
- the selected application service transfers the terminal's network address to the common authentication service;
- the common authentication service checks the network address received from the application service with the relevant network address in its authentication buffer.

16. System according to claim 15, comprising means arranged thus that after having checked the received network address with the network address written in the authentication buffer, the common authentication service transfers an OK/NOK code, the value of which depends on the check result, to the application service.

17. System according to claim 15, comprising means arranged thus that after having checked the received network address with the network address written in the authentication buffer, the common authentication service transfers, if the check is positive, an application authentication code to the application service which is valid for that application service.

18. System according to any of claims 15 - 17, being incorporated in a common authentication service (4).

19. System according to any of claims 15 - 17, being incorporated in an application service (2a, 2b, 2c).

20. System according to claim 19, the application service comprising an application network and/or one or more application servers (2a, 2b, 2c).

21. System according to claim 19, the application service comprising an interface server between the relevant application servers and the common authentication service (4)

22. System according to any of claims 15 - 17, being incorporated in a terminal (1).
